# EUROPEAN PATENT APPLICATION

(11) **EP 4 706 988 A1**
(43) Date of publication of application: **11.03.2026**
(21) Application number: 25195906.0
(22) Date of filing: 14.08.2025
(51) Int. Cl.: B60C 9/18, B60C 9/28, B60C 9/00

(54) **PNEUMATIC TIRE**

(30) Priority: 29.08.2024 JP 2024147489
(71) Applicant: The Yokohama Rubber Co., Ltd., Hiratsuka-shi, Kanagawa 254-8601 (JP)
(72) Inventor: SUZUKI, Sakiko, Hiratsuka-shi, 2548601 (JP); HARIKAE, Shinya, Hiratsuka-shi, 2548601 (JP); ZHANG, Di, Hiratsuka-shi, 2548601 (JP)
(74) Representative: Grünecker Patent- und Rechtsanwälte PartG mbB

(57) **Abstract**

Provided is a pneumatic tire that can provide improved steering stability while satisfactorily maintaining durability and rolling resistance. A pneumatic tire includes a tread portion (1), a pair of sidewall portions (2), a pair of bead portions (3), a carcass layer (4) mounted between the pair of bead portions (3, 3), a plurality of belt layers (7) in which belt cords intersect each other between the belt layers disposed on an outer circumferential side of the carcass layer (4) in the tread portion (1), and a belt cover layer (8) including a belt cover cord (8C) oriented in the tire circumferential direction disposed on an outer circumferential side of the belt layers (7). The belt cover cord (8C) is a polyester fiber cord having an elongation under a load of 2.0 cN/dtex ranging from 2.0% to 4.0%. When measured at a frequency of 20 Hz, an initial load of 300 g, a strain of ±0.1%, and a temperature increase rate of 2°C/minute, a peak temperature of a loss modulus E" of the polyester fiber cord is 115°C or higher, and a peak value of the loss modulus E" is 12000 MPa or less. A cord angle θ of the belt layer (7) with respect to the tire circumferential direction ranges from 27° to 40°.

## Description

### Technical Field

The present invention relates to a pneumatic tire including a belt layer and a belt cover layer provided on an outer circumferential side of a carcass layer and particularly relates to a pneumatic tire that can provide improved steering stability while satisfactorily maintaining durability and rolling resistance.

### Background Art

In a pneumatic tire, a carcass layer is mounted between a pair of bead portions, a plurality of belt layers in which belt cords intersect each other between the belt layers is disposed on an outer circumferential side of the carcass layer in a tread portion, and a belt cover layer including a belt cover cord oriented in a tire circumferential direction is disposed on an outer circumferential side of the belt layers (see, for example, Patent Documents 1 to 4).

As a belt cover cord of a pneumatic tire for passenger vehicles and light trucks, a nylon 66 fiber cord is mainly used, but a polyester fiber cord represented by a polyethylene terephthalate (PET) fiber cord is occasionally used. The PET fiber cord has higher elasticity than the nylon 66 fiber cord. Therefore, when the PET fiber cord is used as the belt cover cord, the rigidity of the tread portion of the pneumatic tire is increased, and steering stability is improved. However, since the PET fiber cord tends to generate heat, there is a concern that durability may be deteriorated.

On the other hand, it is known that a high angle belt structure in which a cord angle of a belt layer with respect to a tire circumferential direction is set to be large is advantageous in terms of low heat generation, weight reduction, and ride comfort when the high angle belt structure is adopted in a pneumatic tire. Therefore, in recent years, there has been an increasing demand for the high angle belt structure. However, in the case of the high angle belt structure, the cornering power of the pneumatic tire may decrease, and steering stability may degrade.

### Citation List

### Patent Literature

Patent Document 1: JP 2023-68374 A
Patent Document 2: JP 2023-68375 A
Patent Document 3: JP 2023-68376 A
Patent Document 4: JP 2023-68377 A

### Summary of Invention

### Technical Problem

An object of the present invention is to provide a pneumatic tire that can provide improved steering stability while satisfactorily maintaining durability and rolling resistance.

### Solution to Problem

To achieve the object described above, a pneumatic tire according to an embodiment of the present invention includes: a tread portion extending in a tire circumferential direction and having an annular shape; a pair of sidewall portions respectively disposed on both sides of the tread portion; a pair of bead portions each disposed on an inner side of the pair of sidewall portions in a tire radial direction; a carcass layer mounted between the pair of bead portions; a plurality of belt layers in which belt cords intersect each other between the belt layers disposed on an outer circumferential side of the carcass layer in the tread portion; and a belt cover layer including a belt cover cord oriented in the tire circumferential direction disposed on an outer circumferential side of the belt layers. The belt cover cord is a polyester fiber cord having an elongation under a load of 2.0 cN/dtex ranging from 2.0% to 4.0%. When measured at a frequency of 20 Hz, an initial load of 300 g, a strain of ±0.1%, and a temperature increase rate of 2°C/minute, a peak temperature of a loss modulus E" of the polyester fiber cord is 115°C or higher, and a peak value of the loss modulus E" is 12000 MPa or less. A cord angle of each of the belt layers with respect to the tire circumferential direction ranges from 27° to 40°.

### Advantageous Effects of Invention

As a result of intensive studies on the belt layer and the belt cover layer of the pneumatic tire, the present inventor has found that, by adopting a high-angle belt structure for the belt layer and using a polyester fiber cord having specific physical properties for the belt cover cord of the belt cover layer, it is possible to complement the disadvantages of both and to maximize the advantages of both, and thus has reached the present invention.

That is, in the present invention, by using the polyester fiber cord having high elasticity as the belt cover cord, excellent steering stability can be exhibited even when the high angle belt structure is adopted for the belt layer. Further, by setting the elongation under a load of 2.0 cN/dtex of the polyester fiber cord and the peak temperature and the peak value of the loss modulus E" of the polyester fiber cord in the above ranges, the heat generation of the polyester fiber cord can be suppressed, and deterioration of durability can be suppressed. Moreover, the high angle belt structure contributes to the reduction of heat generation of the pneumatic tire. Thus, steering stability can be improved while satisfactorily maintaining durability and rolling resistance of the pneumatic tire.

In an embodiment of the present invention, each of the belt cords preferably has a 1×2 structure. Using the belt cords having the 1×2 structure allows for reduction in thickness of the belt layer, increases the weight reduction effect, and can thus reduce rolling resistance. In this case, each of the belt layers preferably has a thickness of 1.05 mm or less.

In an embodiment of the present invention, each of the belt cords preferably has a 2+2 structure. Using the belt cords having the 2+2 structure also allows for sufficient reduction in thickness of the belt layer, ensures the weight reduction effect, and can thus make rolling resistance good. In this case, each of the belt layers preferably has a thickness of 1.25 mm or less.

In an embodiment of the present invention, the cord angle of each of the belt layers with respect to the tire circumferential direction preferably ranges from 30° to 35°. When the cord angle of the belt layer is in the above range, the balance among steering stability, durability, and rolling resistance is optimized.

In an embodiment of the present invention, the elongation under a load of 2.0 cN/dtex is an elongation ratio (%) of a sample cord, which is measured under a load of 2.0 cN/dtex by conducting a tensile test in accordance with JIS-L1017 "Test methods for chemical fiber tire cords" and under the conditions that a length of specimen between grips is 250 mm and a tensile speed is 300 ± 20 mm/minute. The loss modulus E" is a loss modulus E" (MPa) of a sample cord measured at a frequency of 20 Hz, an initial load of 300 g, a strain of ±0.1%, and a temperature increase rate of 2°C/minute in accordance with JIS-K6394 "Rubber, vulcanized or thermoplastic - Determination of dynamic properties". The loss modulus E" is measured in a temperature range of 0°C to 200°C, for example.

### Brief Description of Drawings

FIG. 1 is a meridian cross-sectional view illustrating a pneumatic tire according to an embodiment of the present invention.
FIG. 2 is a developed view in which a belt layer and a belt cover layer of the pneumatic tire in FIG. 1 are extracted and illustrated.
FIG. 3 is a graph indicating the temperature dispersion of a loss modulus E" of a polyester fiber cord that is used in the belt cover layer of the pneumatic tire in FIG. 1.
FIGS. 4A and 4B are each a cross-sectional view illustrating the belt layer of the pneumatic tire in FIG. 1.

### Description of Embodiments

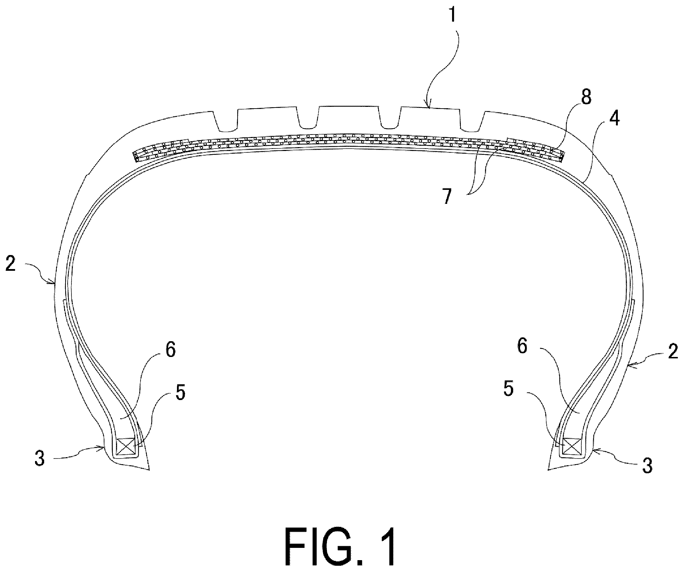

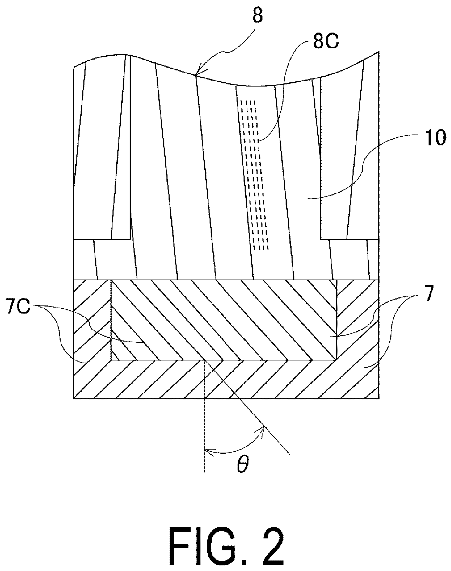

Configurations of embodiments of the present invention will be described in detail below with reference to the accompanying drawings. FIGS. 1 and 2 illustrate a pneumatic tire according to an embodiment of the present invention.

As illustrated in FIG. 1, a pneumatic tire of the present embodiment includes a tread portion 1 extending in a tire circumferential direction and having an annular shape, a pair of sidewall portions 2, 2 disposed on both sides of the tread portion 1, and a pair of bead portions 3, 3 disposed on inner sides of the sidewall portions 2, 2 in a tire radial direction.

A carcass layer 4 is mounted between the pair of bead portions 3, 3. The carcass layer 4 includes a plurality of carcass cords extending in the tire radial direction and is folded back around a bead core 5 disposed in each of the bead portions 3, from a tire inner side to a tire outer side. Organic fiber cords such as polyester fiber cords are preferably used as the carcass cords of the carcass layer 4. A bead filler 6 having a triangular cross-sectional shape and composed of a rubber composition is disposed on the outer circumference of the bead core 5.

On the other hand, a plurality of belt layers 7 is embedded on the outer circumferential side of the carcass layer 4 in the tread portion 1. These belt layers 7 include a plurality of belt cords 7C inclined with respect to the tire circumferential direction, with the belt cords 7C disposed so as to intersect with one another between the belt layers 7. Steel cords are preferably used as the belt cords 7C of the belt layers 7.

To improve high-speed durability, a belt cover layer 8, formed by disposing a belt cover cord 8C at an angle of, for example, 5° or less with respect to the tire circumferential direction, is disposed on an outer circumferential side of the belt layers 7. As the belt cover layer 8, a full cover layer that covers the entire region of the belt layer 7 in the width direction, a pair of edge cover layers that locally cover both end portions of the belt layer 7 in the tire width direction, or a combination thereof can be provided. As illustrated in Fig. 2, for example, the belt cover layer 8 can be formed by helically winding a strip material 10, which is made of at least a single belt cover cord 8C arranged and covered with coating rubber, in the tire circumferential direction.

Note that the tire internal structure described above represents a typical example of a pneumatic tire, but the pneumatic tire is not limited thereto.

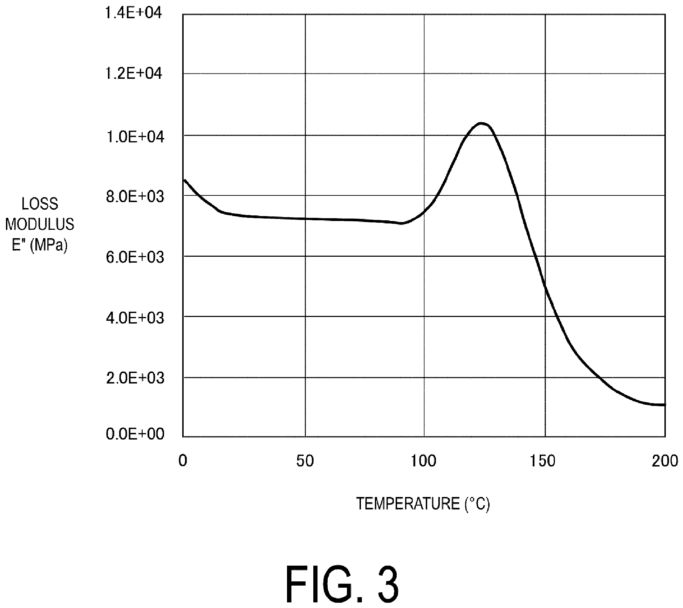

In the pneumatic tire described above, as illustrated in Fig. 2, a cord angle θ of the belt layers 7 with respect to the tire circumferential direction is set in the range of 27° to 40°. That is, the pneumatic tire has a high angle belt structure. On the other hand, a polyester fiber cord having an elongation under a load of 2.0 cN/dtex ranging from 2.0% to 4.0% is used as the belt cover cord 8C constituting the belt cover layer 8. As the polyester fiber cord, for example, a polyethylene terephthalate (PET) fiber cord is preferably used. The PET fiber cord may be at least partially or entirely composed of a recycled fiber of polyethylene terephthalate. As illustrated in FIG. 3, the polyester fiber cord has physical properties in which the peak temperature of the loss modulus E" is 115°C or higher and the peak value is 12000 MPa or less when measured at a frequency of 20 Hz, an initial load of 300 g, a strain of ±0.1%, and a temperature increase rate of 2°C/minute. The polyester fiber cord tends to have a higher peak temperature of the loss modulus E" and a lower peak value thereof as the crystallinity is higher.

As described above, by using the highly elastic polyester fiber cord as the belt cover cord 8C of the belt cover layer 8, excellent steering stability can be exhibited even when the high angle belt structure is adopted for the belt layer 7. Further, by setting the elongation under a load of 2.0 cN/dtex of the polyester fiber cord and the peak temperature and the peak value of the loss modulus E" of the polyester fiber cord in the above ranges, the heat generation of the polyester fiber cord can be suppressed, and deterioration of durability can be suppressed. Moreover, the high angle belt structure contributes to the reduction of heat generation of the pneumatic tire. Thus, steering stability can be improved while satisfactorily maintaining durability and rolling resistance of the pneumatic tire.

Here, when the elongation under a load of 2.0 cN/dtex of the polyester fiber cord used as the belt cover cord 8C is less than 2.0%, the polyester fiber cord is prone to fatigue breakage, and the durability of the pneumatic tire decreases. When the elongation under a load of 2.0 cN/dtex of the polyester fiber cord is greater than 4.0% on the contrary, the belt layer 7 rises greatly during high-speed travel, and the high-speed durability decreases. When the peak temperature of the loss modulus E" of the polyester fiber cord that is used as the belt cover cord 8C is lower than 115°C, the polyester fiber is easily subject to amine degradation because of having a loose amorphous structure, and the durability of the pneumatic tire decreases. When the peak value of the loss modulus E" of the polyester fiber cord used as the belt cover cord 8C is greater than 12000 MPa, the heat build-up of the polyester fiber cord increases, and the durability of the pneumatic tire decreases.

When the cord angle θ of the belt layer 7 with respect to the tire circumferential direction is less than 27°, rolling resistance degrades, and cord separation due to heat generation is induced. When the cord angle θ is more than 40° on the contrary, the cornering power of the pneumatic tire decreases, and steering stability degrades. In particular, the cord angle θ of the belt layer 7 with respect to the tire circumferential direction preferably ranges from 30° to 38° and more preferably ranges from 30° to 35°. In this case, the balance among steering stability, durability, and rolling resistance is optimized. The cord angle θ of the belt layer 7 can be measured at the center portion of a cut sample of the tire. In that event, the cord angles of the first belt layer 7 and the second belt layer 7 counted from the carcass layer 4 side are measured, and the average value thereof is defined as the cord angle θ of the belt layer 7.

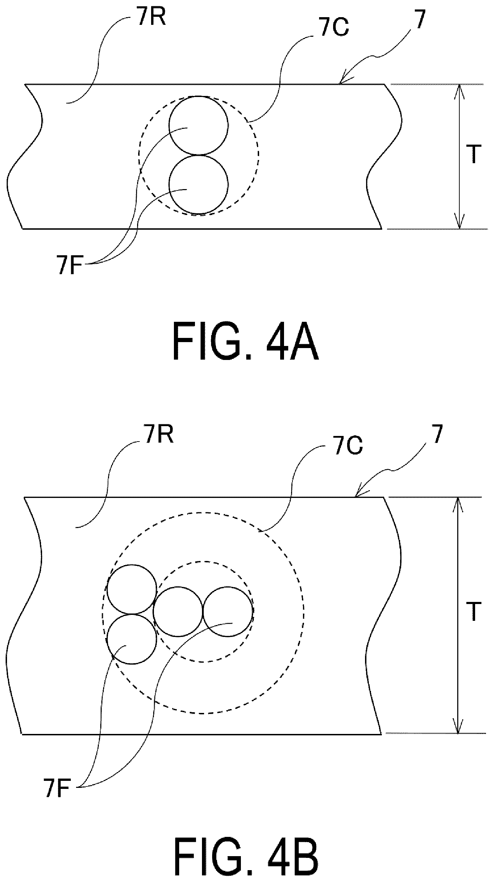

In the pneumatic tire, as illustrated in FIG. 4A, the belt layer 7 is constituted from a belt cord 7C and a coating rubber 7R covering the belt cord 7C. The belt cord 7C preferably has a 1×2 structure. The 1×2 structure is a structure in which two steel filaments 7F are intertwined together. Using the belt cord 7C having the 1×2 structure allows for reduction in thickness of the belt layer 7, increases the weight reduction effect, and can thus reduce rolling resistance. In this case, a thickness T of the belt layer 7 is preferably 1.05 mm or less. This reduces the weight of the belt layer 7, thereby reducing the rolling resistance of the pneumatic tire. The thickness T of the belt layer 7 can be obtained by measuring the center distance of belt cords 7C of two laminated belt layers 7.

In the pneumatic tire, as illustrated in FIG. 4B, the belt cord 7C may have a 2+2 structure. The 2+2 structure is a structure having an inner layer composed of two steel filaments 7F and an outer layer composed of two steel filaments 7F intertwined around the inner layer. The two steel filaments 7F constituting the inner layer may be intertwined together or may not be intertwined. Using the belt cord 7C having the 2+2 structure also allows for sufficient reduction in thickness of the belt layer 7, ensures the weight reduction effect, and can thus make rolling resistance good. In this case, the thickness T of the belt layer 7 is preferably 1.25 mm or less. This reduces the weight of the belt layer 7, thereby reducing the rolling resistance of the pneumatic tire.

As described above, the belt cord 7C preferably has the 1×2 structure or the 2+2 structure from the viewpoint of weight reduction, and thus from the viewpoint of reduction in rolling resistance, but other intertwining structures can also be adopted. In any case, the thickness T of the belt layer 7 is preferably 1.25 mm or less, more preferably 1.05 mm or less. The thickness T of the belt layer 7 can be measured at the center portion of a cut sample of the tire. In that event, the distance between the cord centers of the first belt layer 7 and the second belt layer 7 counted from the carcass layer 4 side is defined as the thickness T of the belt layer 7.

A total fineness D of the polyester fiber cord that is used as the belt cover cord 8C preferably ranges from 1000 dtex to 4500 dtex. The characteristics of the belt cover layer 8 can be optimized by setting a total fineness D of the polyester fiber cord used as the belt cover cord 8C in the above range. Here, when the total fineness D is less than 1000 dtex, the belt layer 7 rises greatly during high-speed travel, and high-speed durability decreases. When the total fineness D is more than 4500 dtex on the contrary, the belt cover layer 8 is thickened, the tire weight increases, and rolling resistance may degrade.

### Examples

Pneumatic tires according to Conventional Example, Comparative Examples 1 to 11, and Examples 1 to 15 were manufactured. In the pneumatic tires having a tire size of 245/40R18 and including a tread portion, a pair of sidewall portions, and a pair of bead portions, a carcass layer mounted between the pair of bead portions, a plurality of belt layers in which belt cords intersect each other between the belt layers disposed on an outer circumferential side of the carcass layer in the tread portion, and a belt cover layer including a belt cover cord oriented in a tire circumferential direction disposed on an outer circumferential side of the belt layers, the cord material of the belt cover layer, the peak temperature and the peak value of the loss modulus E" of the cord of the belt cover layer, the elongation under a load of 2.0 cN/dtex of the cord of the belt cover layer, the cord structure of the belt layer, the thickness of the belt layer, and the cord angle of the belt layer were set as indicated in Tables 1 to 4.

The cord material of the belt cover layer is indicated as "N66" when a nylon 66 fiber cord was used and as "PET" when a polyethylene terephthalate fiber cord was used.

High-speed steering stability, high-speed durability, and rolling resistance were evaluated for these test tires according to the following evaluation method and the results are also indicated in Tables 1 to 4.

### High-speed steering stability:

Each test tire was mounted on a wheel having a rim size of 18×7.0 J, inflated to an air pressure of 200 kPa, and mounted on an FR passenger vehicle having a displacement of 2000 cc. Five trained test drivers drove the vehicle on a test course at a speed of 120 km/h or more to perform a sensory evaluation on the steering stability. Evaluation results were rated by a 5-point scale relative to Conventional Example and expressed as average points of three test drivers excluding the highest point and the lowest point. Larger evaluation points indicate superior high-speed steering stability.

### High-speed durability:

Each test tire was mounted on a wheel having a rim size of 18×7.0 J, inflated to an air pressure of 220 kPa, and mounted on a drum testing machine with a drum having a smooth steel surface and a diameter of 1707 mm. A running test was conducted while controlling the ambient temperature to 38 ± 3°C. In the running test, the test vehicle was run for 20 minutes under conditions of an initial speed of 120 km/h and a load of 88% of the JATMA maximum load, after the completion of which the test vehicle was run for 20 minutes with the speed increased by 10 km/h. The test was continued without interruption by repeatedly increasing the speed and running for 20 minutes until the tire was broken, and the total running distance before the breakage was measured. Evaluation results are expressed as index values with the value of Conventional Example being defined as 100. Larger index values indicate superior high-speed durability. When the index value is 95 or more, the acceptable level is satisfied.

### Rolling Resistance:

Each test tire was mounted on a wheel having a rim size of 18×7.0 J, inflated to an air pressure of 200 kPa, and mounted on a drum testing machine with a drum having a smooth steel surface and a diameter of 1707 mm. Rolling resistance was measured when the tire was driven at a speed of 80 km/h in the state of being pressed against the drum while applying a load equivalent to 85% of the JATMA maximum load. Evaluation results are expressed as index values with the value of Conventional Example being defined as 100. Smaller index values indicate less rolling resistance. When the index value is 101 or less, the acceptable level is satisfied.

**Table 1**

| | | Conventional Example | Comparative Example 1 | Example 1 | Comparative Example 2 | Comparative Example 3 | Comparative Example 4 | Comparative Example 5 | Comparative Example 6 |
|---|---|---|---|---|---|---|---|---|---|
| Belt cover layer | Cord material | N66 | N66 | PET | PET | PET | PET | PET | PET |
| | Peak temperature of loss modulus E" (°C) | 108 | 108 | 124 | 124 | 124 | 124 | 110 | 124 |
| | Peak value of loss modulus E" (MPa) | 4000 | 4000 | 10500 | 10500 | 10500 | 10500 | 10500 | 13000 |
| | Elongation under load of 2.0 cN/dtex (%) | 7.5 | 7.5 | 2.8 | 2.8 | 2.8 | 1.7 | 2.8 | 2.8 |
| Belt layer | Cord structure | 2+2x0.25 | 2+2x0.25 | 2+2x0.25 | 2+2x0.25 | 2+2x0.25 | 2+2x0.25 | 2+2x0.25 | 2+2x0.25 |
| | Thickness (mm) | 1.25 | 1.25 | 1.25 | 1.25 | 1.25 | 1.25 | 1.25 | 1.25 |
| | Cord angle (°) | 25 | 28 | 28 | 25 | 42 | 28 | 28 | 28 |
| High-speed steering stability (5-point scale) | | 3.0 | 2.5 | 3.5 | 3.7 | 2.5 | 3.7 | 3.5 | 3.5 |
| High-speed durability (index value) | | 100 | 95 | 100 | 90 | 95 | 90 | 90 | 90 |
| Rolling resistance (index value) | | 100 | 99 | 101 | 103 | 99 | 101 | 101 | 101 |

**Table 2**

| | | Example 2 | Example 3 | Example 4 | Example 5 | Example 6 | Example 7 |
|---|---|---|---|---|---|---|---|
| Belt cover layer | Cord material | PET | PET | PET | PET | PET | PET |
| | Peak temperature of loss modulus E" (°C) | 115 | 124 | 124 | 124 | 124 | 124 |
| | Peak value of loss modulus E" (MPa) | 10500 | 12000 | 10500 | 10500 | 10500 | 10500 |
| | Elongation under load of 2.0 cN/dtex (%) | 2.8 | 2.8 | 2.0 | 4.0 | 2.8 | 2.8 |
| Belt layer | Cord structure | 2+2x0.25 | 2+2x0.25 | 2+2x0.25 | 2+2x0.25 | 2+2x0.25 | 2+2x0.25 |
| | Thickness (mm) | 1.25 | 1.25 | 1.25 | 1.25 | 1.25 | 1.25 |
| | Cord angle (°) | 28 | 28 | 28 | 28 | 30 | 38 |
| High-speed steering stability (5-point scale) | | 3.5 | 3.5 | 3.7 | 3.3 | 3.5 | 3.3 |
| High-speed durability (index value) | | 95 | 95 | 95 | 95 | 105 | 100 |
| Rolling resistance (index value) | | 101 | 101 | 101 | 99 | 100 | 100 |

**Table 3**

| | | Example 8 | Comparative Example 7 | Comparative Example 8 | Comparative Example 9 | Comparative Example 10 | Comparative Example 11 |
|---|---|---|---|---|---|---|---|
| Belt cover layer | Cord material | PET | PET | PET | PET | PET | PET |
| | Peak temperature of loss modulus E" (°C) | 124 | 124 | 124 | 124 | 110 | 124 |
| | Peak value of loss modulus E" (MPa) | 10500 | 10500 | 10500 | 10500 | 10500 | 13000 |
| | Elongation under load of 2.0 cN/dtex (%) | 2.8 | 2.8 | 2.8 | 1.7 | 2.8 | 2.8 |
| BELT LAYER | Cord structure | 1x2x0.30 | 1x2x0.30 | 1x2x0.30 | 1x2x0.30 | 1x2x0.30 | 1x2x0.30 |
| | Thickness (mm) | 1.05 | 1.05 | 1.05 | 1.05 | 1.05 | 1.05 |
| | Cord angle (°) | 28 | 25 | 42 | 28 | 28 | 28 |
| High-speed steering stability (5-point scale) | | 3.3 | 3.5 | 2.3 | 3.5 | 3.3 | 3.3 |
| High-speed durability (index value) | | 100 | 90 | 90 | 90 | 90 | 90 |
| Rolling resistance (index value) | | 100 | 102 | 98 | 100 | 100 | 100 |

**Table 4**

| | | Example 9 | Example 10 | Example 11 | Example 12 | Example 13 | Example 14 | Example 15 |
|---|---|---|---|---|---|---|---|---|
| Belt cover layer | Cord material | PET | PET | PET | PET | PET | PET | PET |
| | Peak temperature of loss modulus E" (°C) | 115 | 124 | 124 | 124 | 124 | 124 | 124 |
| | Peak value of loss modulus E" (MPa) | 10500 | 12000 | 10500 | 10500 | 10500 | 10500 | 10500 |
| | Elongation under load of 2.0 cN/dtex (%) | 2.8 | 2.8 | 2.8 | 2.0 | 4.0 | 2.8 | 2.8 |
| Belt layer | Cord structure | 1x2x0.30 | 1x2x0.30 | 1x2x0.30 | 1x2x0.30 | 1x2x0.30 | 1x2x0.30 | 1x2x0.30 |
| | Thickness (mm) | 1.05 | 1.05 | 1.00 | 1.05 | 1.05 | 1.05 | 1.05 |
| | Cord angle (°) | 28 | 28 | 28 | 28 | 28 | 30 | 38 |
| High-speed steering stability (5-point scale) | | 3.3 | 3.3 | 3.3 | 3.5 | 3.2 | 3.3 | 3.2 |
| High-speed durability (index value) | | 95 | 95 | 100 | 95 | 95 | 105 | 100 |
| Rolling resistance (index value) | | 100 | 100 | 99 | 100 | 98 | 99 | 99 |

As can be seen from Tables 1 to 4, the tires of Examples 1 to 15 all had improved high-speed steering stability while satisfactorily maintaining high-speed durability and rolling resistance as compared with Conventional Example using a nylon fiber cord as the belt cover cord.

On the other hand, the tire of Comparative Example 1 used the nylon 66 fiber cord as the belt cover cord but adopted the high angle belt structure, thus the high-speed steering stability decreased, and the high-speed durability decreased due to the rising of the belt layer. The tires of Comparative Examples 2 and 7 used the PET fiber cord as the belt cover cord but adopted a low angle belt structure, thus rolling resistance was deteriorated, belt-edge separation due to heat generation occurred, and high-speed durability decreased. Since the tires of Comparative Examples 3 and 8 had too large cord angle of the belt layer, the high-speed durability decreased due to the rising of the belt layer. Since the tires of Comparative Examples 4 and 9 had too small elongation under a load of 2.0 cN/dtex of the polyester fiber cord used as the belt cover cord, the high-speed durability decreased due to the fatigue fracture of the cord. Since the tires of Comparative Examples 5 and 10 had too low peak temperature of the loss modulus E" of the polyester fiber cord used as the belt cover cord, the high-speed durability decreased due to fatigue fracture of the cord. Since the tires of Comparative Examples 6 and 11 had too high peak value of the loss modulus E" of the polyester fiber cord used as the belt cover cord, belt-edge separation due to heat generation occurred, and the high-speed durability decreased.

### Reference Signs List

1 Tread portion
2 Sidewall portion
3 Bead portion
4 Carcass layer
5 Bead core
6 Bead filler
7 Belt layer
7C Belt cord
7R Coating rubber
7F Steel filament
8 Belt cover layer
8C Belt cover cord
10 Strip material

## Claims

1. A pneumatic tire, comprising:
a tread portion extending in a tire circumferential direction and having an annular shape;
a pair of sidewall portions respectively disposed on both sides of the tread portion;
a pair of bead portions each disposed on an inner side of the pair of sidewall portions in a tire radial direction;
a carcass layer mounted between the pair of bead portions;
a plurality of belt layers in which belt cords intersect each other between the belt layers disposed on an outer circumferential side of the carcass layer in the tread portion; and
a belt cover layer comprising a belt cover cord oriented in the tire circumferential direction disposed on an outer circumferential side of the belt layers;
the belt cover cord being a polyester fiber cord having an elongation under a load of 2.0 cN/dtex ranging from 2.0% to 4.0%,
when measured at a frequency of 20 Hz, an initial load of 300 g, a strain of ±0.1%, and a temperature increase rate of 2°C/minute, a peak temperature of a loss modulus E" of the polyester fiber cord being 115°C or higher, and a peak value of the loss modulus E" being 12000 MPa or less, and
a cord angle of each of the belt layers with respect to the tire circumferential direction ranging from 27° to 40°.

2. The pneumatic tire according to claim 1, wherein each of the belt cords has a 1×2 structure.

3. The pneumatic tire according to claim 2, wherein each of the belt layers has a thickness of 1.05 mm or less.

4. The pneumatic tire according to claim 1, wherein each of the belt cords has a 2+2 structure.

5. The pneumatic tire according to claim 4, wherein each of the belt layers has a thickness of 1.25 mm or less.

6. The pneumatic tire according to any one of claims 1 to 5, wherein the cord angle of each of the belt layers with respect to the tire circumferential direction ranges from 30° to 35°.
